# FASCICULE DE BREVET EUROPEEN

(11) **EP 0 416 985 B1**
(45) Date de publication et mention de la délivrance du brevet: **02.11.1994**
(21) Numéro de dépôt: 90402406.4
(22) Date de dépôt: 31.08.1990
(51) Int. Cl.: H04N 1/00

(54) **Procédé de multiplexage d'un signal sonore avec un signal vidéo analogique et système correspondant de distribution d'images fixes sonorisées**
Verfahren zum Multiplexieren eines Tonsignals mit einem analogen Videosignal und entsprechendes Verteilungssystem für Standbilder mit Ton
Method of multiplexing a sound signal with an analogue video signal and corresponding distribution system for still images with sound

(30) Priorité: 05.09.1989 FR 8911591
(43) Date de publication de la demande: 13.03.1991
(73) Titulaire: FRANCE TELECOM, 75015 Paris (FR); TELEDIFFUSION DE FRANCE S.A., 75015 Paris (FR)
(72) Inventeur: Charbonnel, Pierre, F-35830 Betton (FR); Thepaut, Bernard, F-35740 Pace (FR)
(74) Mandataire: Rodhain, Claude

(56) Documents cités:
- GB-A- 2 174 874
- US-A- 3 953 881
- US-A- 4 028 733
- US-A- 4 295 154
- US-A- 4 488 182
- US-A- 4 602 295
- US-A- 4 647 985
- US-A- 4 816 928
- PATENT ABSTRACTS OF JAPAN vol. 7, no. 255 (E-210)(1400) 12 novembre 1983,& JP-A-58 139580 (NIPPON DENSHIN) 18 août 1983,
- PATENT ABSTRACTS OF JAPAN vol. 10, no. 48 (P-431) 25 février 1986,& JP-A-60 191469 (RICOH) 28 septembre 1985,
- IEEE TRANSACTIONS ON CONSUMER ELECTRONICS. vol. CE-30, no. 3, août 1984, NEW YORK US pages 230 - 235; Moriyama: "An optical video disc system for retrieving digital data and reproducing still picture with sound"
- PATENT ABSTRACTS OF JAPAN vol. 8, no. 194 (E-264)(1631) 6 septembre 1984,& JP-A-59 83484 (MATSUSHITA) 14 mai 1984

## Description

Le domaine de l'invention est celui des procédés de multiplexage d'un signal de séquences sonores à l'intérieur d'un signal d'image vidéo analogique.

Plus particulièrement, l'invention concerne un nouveau procédé de multiplexage d'un signal de séquences sonores échantillonné et multiplexé par modulation d'amplitude d'impulsion dans les lignes utiles du signal d'image vidéo.

Ce nouveau procédé s'inscrit dans les techniques de transmission de signaux compatibles avec les équipements actuels et tient compte des spécificités des supports de transmission existants.

Les procédés connus de multiplexage d'un signal de séquences sonores avec un signal d'image vidéo analogique font appel aux techniques de numérisation d'échantillons sonores et de multiplexage d'un signal à l'état logique correspondant à la quantification numérique de chaque échantillon sonore avec le signal d'image vidéo analogique par répartition temporelle dans les lignes utiles de celui-ci (modulation par impulsion et codage). Un tel procédé est décrit dans le brevet US 4 816 928 (SONY Corp).

Cependant, ces techniques de codage connues limitent les capacités de transport du signal d'image vidéo analogique en terme de durée de séquences sonores insérées par ligne utile du signal d'image, ces limitations étant dues essentiellement au procédé de codage des échantillons sonores.

En conséquence, l'objectif de l'invention est de pallier cet inconvénient et notamment d'augmenter de façon sensible la durée des séquences sonores insérées dans chaque ligne utile du signal d'image vidéo analogique en optimisant l'utilisation de la dynamique d'amplitude du signal d'image vidéo pour le codage des échantillons sonores en tenant compte du niveau de bruit du signal vidéo, cette durée devant être de l'ordre de 8 secondes de son de qualité téléphonique par trame d'image pour un canal de transmission d'un signal d'image vidéo analogique d'une largeur de bande de base de 5 mégahertz et d'une dynamique d'amplitude inférieure à 50 dB.

Cet objectif est atteint à l'aide d'un procédé de multiplexage d'un signal sonore analogique dans un signal vidéo analogique comportant un niveau de bruit donné, dans lequel le signal sonore est multiplexé dans une partie utile du signal vidéo analogique correspondant à une image vidéo, tel que défini dans la revendication 1.

De cette manière, si la période des échantillons sonores modulés dans le signal vidéo par modulation d'amplitude d'impulsion est de 160 nanosecondes, ce qui est compatible avec les caractéristiques des voies vidéo existantes, il est possible de coder 8 secondes de son (32 kilobits/seconde par trame vidéo ; norme G 721) ou 4 secondes de son (64 kilobits/seconde par trame vidéo ; norme G 711), une trame de signal d'image vidéo représentant 1/50 seconde en mode "Pal-Secam").

Selon une autre caractéristique de l'invention, chaque sous-expression numérique comporte de préférence quatre éléments binaires.

Selon encore une autre caractéristique de l'invention, chaque expression numérique de codage comporte un nombre d'éléments binaires multiple de quatre et l'étape d'extraction des sous-expressions numériques de codage comprend une étape de segmentation de l'expression numérique de codage en sous-expressions numériques de codage et une étape fournissant successivement les expressions numériques pour leur multiplexage.

De cette manière, bien que limité par la dynamique d'amplitude du signal d'image vidéo, on peut augmenter la résolution des échantillons numériques du signal de séquence sonore. Par ailleurs, une marge de sécurité vis-à-vis du bruit peut toujours être conservée.

L'invention concerne aussi un système interactif de distribution d'images fixes sonorisées mettant en oeuvre le procédé de codage selon l'invention, dans lequel on transmet simultanément par le même canal de transmission vidéo des éléments d'images fixes et des éléments de signal sonore de séquences sonores associés aux images fixes.

On connaît déjà des systèmes de distribution interactifs d'images sonorisées, par exemple de la demande de brevet GB-A- 2 174 874. Cependant, l'inconvénient majeur de ces systèmes connus réside dans le fait que le transport des images et du son se fait dans des voies séparées. Dans la demande précitée, le signal audio est transmis dans la bande passante du câble qui est indisponible pour les signaux vidéo. Par ailleurs, ces systèmes connus ne sont pas compatibles avec le mode diffusé.

En conséquence, un autre objectif de l'invention est de proposer un système interactif de distribution d'images fixes sonorisées utilisant une voie de transmission unique vidéo et pouvant assurer 25 consultations d'images simultanément par secondes avec au moins 8 secondes de son (qualité téléphonique ; norme G 721 du CCITT) associées à chacune des images fixes.

Cet objectif est atteint à l'aide d'un système interactif de distribution d'images fixes sonorisées diffusant les images fixes associées aux séquences sonores par l'intermédiaire d'un réseau de vidéo-communication vers une pluralité de terminaux de réception, tel que défini dans la revendication 6 :

Selon une autre caractéristique du système interactif de distribution d'images fixes sonorisées selon l'invention le terminal de réception comprend
- des moyens de conversion analogique numérique pour convertir numériquement le signal d'image vidéo analogique en composants d'élément d'image,
- des moyens d'aiguillage reliés aux moyens de conversion analogique numérique, commandés par un signal de trame pour isoler un ensemble d'éléments d'image numérisée d'une trame d'image et une suite d'expressions numériques d'une séquence sonore numérisée associée, multiplexés dans la trame d'image adjacente,
- des moyens de mémorisation reliés aux moyens d'aiguillage pour mémoriser alternativement selon la commande du signal de trame, l'ensemble d'éléments d'image et la suite d'expressions numériques,
- des moyens de conversion numérique analogique reliés aux moyens de mémorisation pour délivrer un signal sonore analogique à partir de la suite d'expressions numériques.

L'invention sera mieux comprise à l'aide de la description qui va suivre d'un mode de réalisation préférentiel de l'invention donné à titre illustratif et non limitatif et des dessins annexés dans lesquels :
- la figure 1 représente de façon schématique un système interactif de distribution d'images fixes sonorisées,
- la figure 2 représente de façon schématique un dispositif de multiplexage de séquences sonores dans un signal vidéo analogique selon l'invention dans lequel le signal de séquence sonore est numérisé sur quatre éléments binaires,
- la figure 3 représente de façon schématique un dispositif de multiplexage de séquences sonores, correspondant à celui de la figure 2, dans lequel le signal de séquence sonore est numérisé sur huit éléments binaires,
- la figure 4 représente de façon schématique un terminal pour le décodage du signal sonore multiplexé dans la voie vidéo selon l'invention.

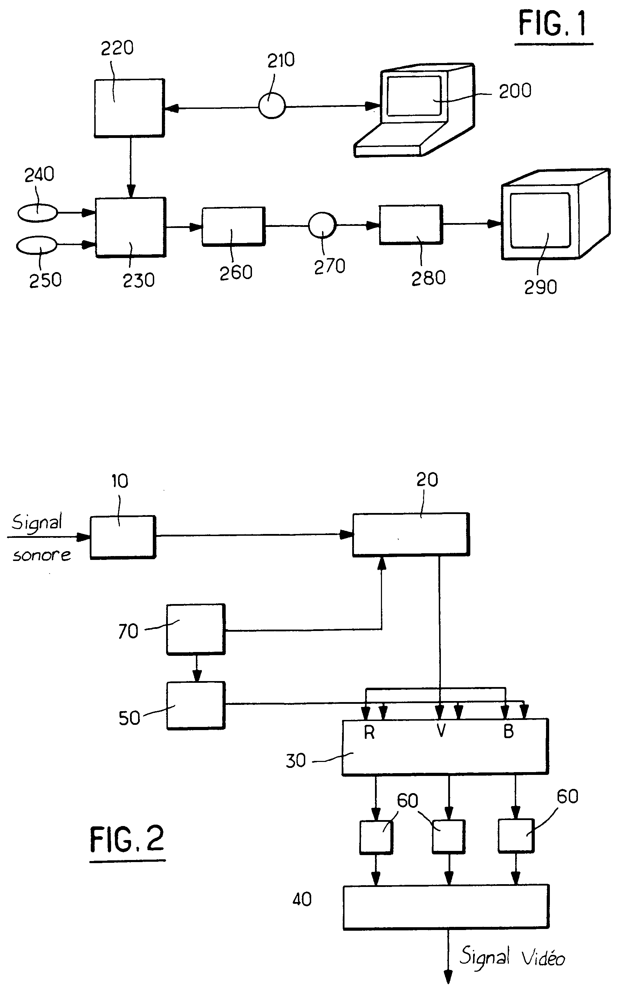

Comme visible sur la figure 1, le système interactif de distribution d'images fixes sonorisées comporte un site serveur constitué d'une part d'un serveur télématique 220 relié par le réseau téléphonique commuté 210 à une pluralité de terminaux télématiques 200 et d'autre part un serveur audiovisuel 230 relié par un réseau de vidéo-communication, par exemple le réseau large bande 270, à une pluralité de terminaux de réception vidéo d'images sonorisées 280, 290 associés à la pluralité de terminaux télématiques 200.

Le serveur audio-visuel 230 est par ailleurs relié à des moyens de stockage d'une base documentaire d'images fixes 240 mémorisées sous forme numérique (par exemple sous la forme de pixels d'image codés en composantes couleur sur douze éléments binaires dont quatre pour la composante rouge (R), quatre pour la composante verte (V), quatre pour la composante bleue (B) ou codé en composantes de luminance (Y) et de chrominance (DR,DB) sur douze éléments binaires dont sept pour la composante de luminance (Y) et cinq pour la composante de chrominance (DR/DB)) et à des moyens de stockage d'une base documentaire de séquences sonores 250 mémorisées aussi sous forme numérique (par exemple sous la forme d'échantillons numériques du signal sonore échantillonné codés sur quatre éléments binaires correspondant à une qualité sonore téléphonique).

A chaque image fixe de la base documentaire d'images est associée une séquence sonore de la base documentaire de séquences sonores servant de commentaire de l'image fixe. L'image étant fixe, on transmet par le canal de vidéo-communication au moyen d'un codeur "Pal-Secam" 260 relié au serveur audiovisuel une seule trame d'image par image, la seconde trame étant utilisée pour l'insertion par multiplexage de la séquence sonore associée.

La consultation d'une image fixe sonorisée par un usager s'effectue de la manière suivante. L'usager se met en communication avec le serveur télématique 220 au moyen du terminal télématique 200 pour lui fournir son code d'identification personnel ainsi que le numéro de l'image fixe qu'il désire visualiser sur le poste de réception vidéo 290.

Le serveur audiovisuel 230 comportant un plan mémoire d'images fixes sonorisées alimenté par les moyens de stockage des bases documentaires 240, 250 met à jour en permanence le plan mémoire d'images fixes sonorisées en fonction des informations que lui délivre le serveur télématique. Par ailleurs, chaque image fixe chargée dans le plan mémoire contient sous forme codée le code d'identification de l'usager désirant la visualiser.

Le serveur audiovisuel diffuse alors les images fixes sonorisées en lisant cycliquement le plan mémoire. Le signal d'image vidéo transmis comporte de façon codée pour une image fixe sonorisée une trame d'image relative aux informations d'image et une trame de "pseudo-image" relative aux informations de la séquence sonore multiplexée dans le signal vidéo. Ce signal vidéo composite est reçu par un terminal 280 relié au poste vidéo de réception d'images 290 pour décoder les informations d'image contenues dans une trame d'image et les informations sonores multiplexées dans une trame d'image adjacente. L'image fixe est identifiée au niveau du terminal 280 par reconnaissance du code usager et est affichée au niveau du poste de réception d'image vidéo 290, tandis que les informations sonores décodées sont délivrées à l'usager en tant que commentaire de l'image fixe affichée.

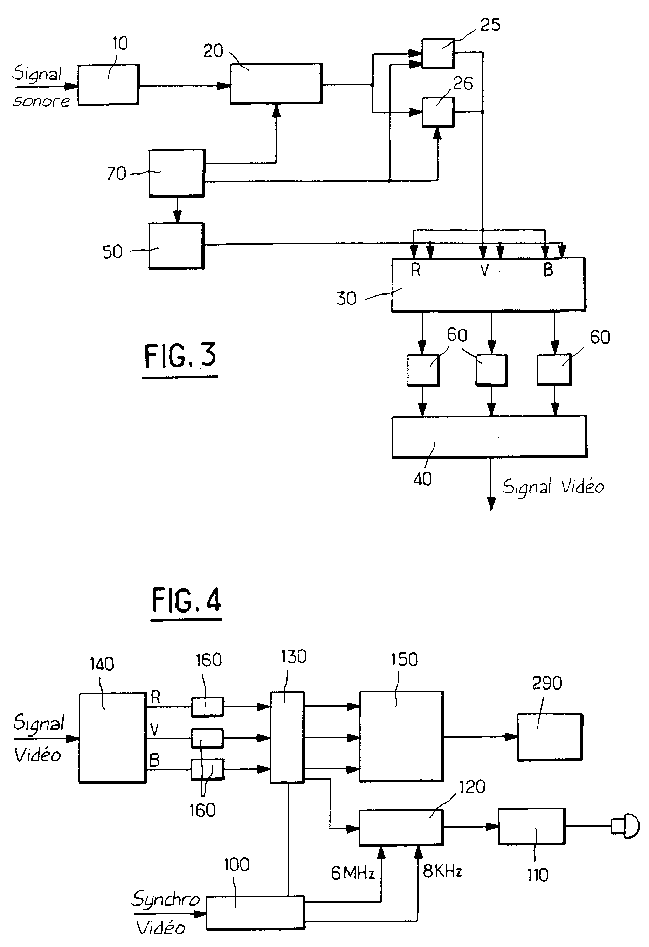

Nous allons décrire maintenant le procédé de multiplexage du signal sonore dans le signal vidéo analogique qui est transmis par le serveur audiovisuel 230 en se reportant aux figures 2 et 3.

Comme visible en figure 2, le signal de séquences sonores est appliqué à l'entrée d'un convertisseur analogique numérique 10 pour être échantillonné à une fréquence d'échantillonnage de huit KHz par exemple.

Le niveau d'amplitude de chaque échantillon sonore peut être codé de façon connue sur 12 éléments binaires définissant un niveau de résolution déterminé.

Un signal d'image vidéo analogique est composé d'une succession de lignes d'images d'une durée utile de 52 microsecondes. La dynamique d'amplitude du signal vidéo analogique est de l'ordre de 50 dB. Compte tenu de cette dynamique d'amplitude et selon la loi de quantification, on peut différencier seize niveaux différents d'amplitude du signal dans la partie du signal correspondant à la ligne utile d'une image vidéo tout en assurant une marge suffisante de sécurité vis-à-vis du bruit. La marge de sécurité ainsi obtenue est de 24 dB. Par conséquent, le niveau d'amplitude d'une impulsion modulée dans la ligne utile du signal d'image vidéo analogique peut correspondre à une valeur de quantification exprimée sur quatre éléments binaires.

Préalablement à la conversion analogique numérique du signal de séquences sonores, on effectue une compression de débit en utilisant soit un algorithme logarithmique, soit un algorithme du type "ADPCM" ("ADAPTATIVE DIFFERENTIAL PULSE CODE MODULATION") pour obtenir en sortie du convertisseur 10 une suite d'expressions de codage comportant 4 éléments binaires représentatifs des échantillons sonores.

La suite d'expressions de codage est ensuite mémorisée dans un moyen de mémorisation temporaire 20 dont la capacité est telle que la continuité de la séquence sonore est assurée.

La mémoire temporaire 20 contient donc une suite d'expressions de codage exprimée sur 4 éléments binaires. On extrait séquentiellement de la mémoire temporaire 20, dans l'ordre de leur mémorisation, chaque expression de codage à une fréquence égale ou sous multiple de la fréquence ligne du signal vidéo analogique pour attaquer un convertisseur numérique analogique 60 d'une résolution de 4 bits et dont la fréquence de conversion est supérieure à 12 MHz.

Le convertisseur numérique analogique 60 peut être du type "AD97 02" de "ANALOG DEVICES". Le convertisseur numérique analogique 60 délivre des impulsions ou échantillons analogiques dont l'amplitude est proportionnelle à la quantification des expressions de codage. Les échantillons analogiques sont substitués aux éléments composantes couleurs de l'image vidéo pour être multiplexés dans le signal d'image vidéo analogique par un codeur séquentiel 40 du type "PAL-SECAM - NTSC" ou analogue pour leur diffusion sur une canal de transmission vidéo.

De façon préférentielle, le multiplexage des séquences sonores dans le signal vidéo analogique se fait une trame d'image sur deux, la seconde trame étant réservée au codage des éléments d'image d'une image fixe à diffuser comme décrit précédemment.

Un multiplexeur 30 est couplé entre la mémoire temporaire 20 et le convertisseur numérique analogique 60. le multiplexeur 30 est relié en entrée à une mémoire 50 d'éléments d'image (pixels) numériques correspondant, soit aux composantes couleurs RVB soit aux composantes luminance et chrominance, codées sur douze éléments binaires. Le Multiplexeur 30 synchronisé sur une fréquence de trame d'image vidéo restitue alternativement aux convertisseurs 60 soit des échantillons sonores, soit des éléments d'image à chaque trame d'image. De cette manière, on utilise les mêmes voies du multiplexeur 60 pour le codage des images et des séquences sonores. On voit que de manière avantageuse, la capacité de la mémoire temporaire 20 correspondra à la mémorisation d'une suite d'expressions de codage à insérer dans une trame d'image vidéo. Cette mémoire de trame pourra être constituée de composants de mémoire vive du type "N43 256 C" de "NEC".

Dans le cas du système de distribution d'images fixes sonorisées, les expressions de codage relatives au signal de séquences sonores sont préalablement mémorisées dans le moyen de stockage 250 et par conséquent le signal de séquence sonore n'est pas numérisé en temps réel. De même, la mémoire temporaire 20 pourra avoir une capacité de 128 kilos mots de 4 bits pour permettre la distribution de 25 images par seconde avec pour chacune d'elle 8 secondes de séquence sonore de qualité téléphonique.

On prévoit de façon avantageuse, une base de temps 70 constituant moyen d'extraction, reliée à la mémoire temporaire 20 d'expressions de codage et à la mémoire d'éléments d'image 50 pour sélectionner de manière alternative l'une ou l'autre des mémoires en fonction d'un signal de synchronisation de trame.

En sortie du convertisseur analogique numérique 10, le signal de séquence sonore peut être numérisé sous la forme d'une suite d'expressions de codage comportant huit éléments binaires par un procédé de numérisation et de compression par réduction de débit binaire du type loi logarithmique A type G711 du "CCITT". Cette expression de codage ne peut être multiplexée directement sous forme impulsionnelle dans le signal d'image vidéo étant donné la dynamique d'amplitude limitée de ce dernier. Les expressions de codage ainsi obtenues sont mémorisées dans la mémoire temporaire 20, comme décrit précédemment, sous forme d'octets. En sortie de la mémoire temporaire 20, on réalise une segmentation de l'expression de codage en deux sous-expressions de codage comportant chacune quatre éléments binaires correspondant respectivement aux poids forts et aux poids faibles de l'expression de codage. Cette segmentation est obtenue à l'aide de deux registres à décalage 25,26, par exemple, alimentés par la mémoire temporaire 20. ces registres à décalage, 25, 26 fonctionnent de manière à fournir successivement au multiplexeur 30 une première sous-expression de codage délivrée par le registre 25 correspondant par exemple aux bits de poids forts de l'expression de codage et une seconde sous-expression de codage délivrée par le registre 26 correspondant aux bits de poids faibles de l'expression de codage, chaque sous-expression de codage comportant quatre éléments binaires. Dans ce cas, les registres à décalage fonctionnent à une fréquence moitié de la fréquence ligne.

Chacune des sous-expressions de codage ainsi obtenue est fournie comme précédemment au convertisseur numérique analogique 60 pour être multiplexée dans le signal d'image vidéo. On pourra avantageusement coder dans le signal d'image vidéo des expressions de codage issues de la numérisation d'un signal sonore dont la taille en éléments binaires est supérieure à 8 éléments binaires en appliquant le même procédé.

Selon ce procédé, à chaque expression de codage codée sur huit éléments binaires on fait correspondre un couple d'échantillons analogiques du type signal impulsionnel délivré par le convertisseur numérique analogique 60 dont le cumul des niveau d'amplitude correspond à la quantification de l'expression de codage.

De façon avantageuse l'expression de codage comportera un nombre d'éléments binaires multiple de quatre pour faciliter le traitement au niveau de la segmentation.

Le signal d'image vidéo analogique fourni par le codeur 40 comporte une succession de trames correspondant alternativement à une trame d'image et à une trame de pseudo-image, la trame de pseudo-image comportant les échantillons sonores multiplexés.

Ce signal d'image vidéo analogique "composite" est reçu par un terminal 280 relié au poste de réception de visualisation d'image vidéo 290 comme visible en figure 1.

Le terminal 280 à pour rôle de restituer d'une part les éléments d'image insérés dans une première trame et les éléments de son multiplexés dans une seconde trame adjacente.

Le signal d'image vidéo composite reçu à l'entrée du terminal 280 est décodé en composantes couleurs RVB par un décodeur 140 "Pal-Secam" par exemple, comme visible en figure 4.

Les signaux RVB sont numérisés par des convertisseurs analogiques numériques 160 qui délivrent une suite de mots binaires de quatre bits. La suite de mots binaires est segmentée en deux trames de suite de mots binaires, l'une correspondant à une trame d'image, l'autre correspondant à une trame de pseudo-image, la segmentation étant commandée par un multiplexeur 130 du type "74 157" de "TEXAS INSTRUMENTS" formant moyen d'aiguillage. le multiplexeur 130 est alimenté par un signal de trame paire/impaire fourni par une base de temps 100 du type extracteur de synchronisation vidéo "LM 1881" de "N.S". Les données numérisées aiguillées par le multiplexeur 130 sont mémorisées respectivement dans une mémoire de trame d'image 150 pour ce qui concerne les éléments d'image et une mémoire trame son 120 pour ce qui concerne les expressions de codage relatives à une séquence sonore. De façon préférentielle, la taille de la mémoire trame image 150 est de 256 kilos octets et la taille de la mémoire trame son est de 128 kilos mots de 4 bits.

La base de temps 100 reliée à la mémoire de trame son 120 autorise une écriture d'expressions de codage dans la mémoire 120 à une fréquence de 6 MHz moitié de la fréquence pixel, ce qui correspond à une période d'échantillon de 160 nanosecondes et autorise une lecture des expressions de codage contenues dans la mémoire trame son 120 à une fréquence d'échantillonnage sonore de 8 KHz, lesquelles sont fournies à un décodeur 110.

Dans le cas d'une transmission d'échantillons sonores correspondant à une expression de codage exprimée sur huit éléments binaires, les sous-expressions de codage exprimées sur quatre éléments binaires délivrés par les convertisseurs analogiques numériques 60 sont placés séquentiellement dans la mémoire de trame son, les octets correspondant aux expressions de codage sont sérialisés pour alimenter un codeur décodeur son avec filtrage 110 du type "TCR 2913" de "TEXAS INSTRUMENTS" qui converti sous forme analogique les expressions de codage et délivre un signal sonore analogique correspondant.

L'utilisation des mémoire de trame 150, 120 présente l'avantage de "geler" le contenu d'une image, c'est à dire une trame image et un trame son et de pouvoir répéter autant que nécessaire la séquence sonore.

Comme cela a été mentionné précédemment, la période des échantillons analogiques est de 160 nanosecondes. Une telle période revient à inscrire chaque sous-expression numérique de codage dans deux éléments numériques d'image vidéo (pixels).

Ainsi, dans le moyen de stockage 230, chaque sous-expression numérique de codage est dupliquée dans deux mots mémoire correspondant à deux éléments numériques d'image vidéo pour s'affranchir des performances du dispositif de restitution du signal sonore.

Bien entendu, on peut prévoir d'inscrire chaque sous-expression numérique de codage dans plus de deux mots mémoire. Toutefois, on réduit la capacité de transport du canal vidéo.

Un problème particulier du procédé de multiplexage selon l'invention réside dans le fait qu'on augmente le taux de corrélation du signal vidéo dû aux variations importantes du niveau d'amplitude des échantillons analogiques successifs. Pour rester compatible avec un système de codage vidéo du type SECAM, la bande passante du signal de luminance doit être de l'ordre de 2,5MHz. Pour respecter la bande passante du signal de luminance, on effectue une interpolation entre les sous-expressions numériques de codage adjacentes. L'interpolation consiste à remplacer la valeur d'une des sous-expressions numériques de codage inscrites dans des doublets de pixels par une valeur moyenne de niveau d'amplitude correspondant à la moyenne des niveaux d'amplitude de deux sous-expressions numériques de codage adjacentes. Cette opération revient à réaliser un filtrage numérique qui permet d'atténuer les spectres de repliement de fréquences qui engendrent des interférences entre les échantillons analogiques sonores dans le signal vidéo. dans le prolongement de ce perfectionnement on peut réaliser une double interpolation lorsque chaque sous-expression de codage est inscrite dans trois pixels pour augmenter encore plus la qualité de restitution du signal sonore.

## Revendications

1. Un procédé de multiplexage d'un signal sonore analogique dans un signal vidéo analogique comportant un niveau de bruit donné, dans lequel le signal sonore est multiplexé dans une partie utile du signal vidéo correspondant à une image vidéo, procédé dans lequel :
- on numérise (10) le signal sonore et on effectue une compression de son débit pour obtenir une suite d'expressions numériques ;
- on mémorise temporairement (20) la suite d'expression numériques, caractérisé en ce qu'il comporte les étapes suivantes :
- on extrait séquentiellement de la mémoire temporaire des sous-expressions à une fréquence sous-multiple de la fréquence ligne du signal vidéo ou égale à celle-ci, chaque sous-expression numérique comportant un nombre prédétermié minimal d'éléments binaires assurant une marge de sécurité suffisante vis-à-vis du bruit du signal vidéo;
- on convertit (60) chaque sous-expression numérique extraite pour fournir des impulsions modulées en amplitude dont le niveau d'amplitude est proportionnel à la quantification de la sous-expression numérique considérée ;
- on insère par multiplexage (40) les impulsions modulées en amplitude dans la partie utile du signal vidéo pour fournir un signal composite ayant le même format qu'un signal vidéo.

2. Un procédé selon la revendication 1, dans lequel une sous-expression numérique comporte quatre éléments binaires.

3. Un procédé selon la revendication 2, dans lequel une expression numérique comporte un nombre d'éléments binaires multiple de quatre et dans lequel l'étape d'extraction des sous-expressions numériques comprend une étape de segmentation de l'expression numérique en sous-expressions numériques et une étape fournissant successivement les sous-expressions numériques pour leur multiplexage.

4. Un procédé selon l'une quelconque des revendications précédentes dans lequel chaque sous-expression numérique est inscrite dans une période correspondant à celle d'une pluralité de pixels d'image vidéo , de préférence deux pixels d'image vidéo.

5. Un procédé selon la revendication 4 dans lequel on associe à chaque sous-expression numérique au moins une sous-expression numérique présentant une valeur moyenne de niveau d'amplitude correspondant à la moyenne des niveaux d'amplitude de deux sous-expressions numériques adjacentes.

6. Système interactif de distribution d'images fixes sonorisées diffusant les images fixes associées aux séquences sonores par l'intermédiaire d'un réseau de vidéo-communication vers une pluralité de terminaux de réception (280, 290), ce réseau utilisant un signal vidéo analogique comportant un niveau de bruit donné, dans lequel un signal sonore est multiplexé dans une partie utile du signal vidéo correspondant à une image vidéo, caractérisé en ce qu'il comprend :
- des premiers moyens de mémorisation (50) d'une pluralité d'ensembles d'éléments d'images numérisées,
- des seconds moyens de mémorisation (20) d'une pluralité de suites d'expressions numériques d'un signal de séquences sonores numérisé, chaque image étant associée à une séquence sonore,
- des moyens d'extraction (70) reliés aux premier et second moyens de mémorisation (50, 20) pour extraire de manière alternative des premiers moyens de mémorisation (50) un ensemble d'éléments d'images d'une image numérisée correspondant à une trame d'image, et des seconds moyens de mémorisation (20) une suite de sous-expressions numériques correspondant à une séquence sonore d'une durée prédéterminée, à une fréquence sous-multiple de la fréquence ligne du signal vidéo ou égale à celle-ci, chaque sous-expression numérique comportant un nombre prédéterminé minimal d'éléments binaires assurant une marge de sécurité suffisante vis-à-vis du bruit du signal vidéo,
- des moyens de conversion numérique analogique (60) reliés auxdits moyens de mémorisation pour convertir sous forme analogique de façon alternative l'ensemble d'éléments d'images et la suite de sous-expressions numériques,
- des moyens de codage vidéo (40) reliés aux moyens de conversion numérique analogique pour fournir un signal composite ayant le même format qu'un signal d'image vidéo analogique composite comportant alternativement une trame d'éléments d'image et une trame de sous-expressions numériques.

7. Système selon la revendication 6, dans lequel un terminal de réception comprend
- des moyens de conversion analogique numérique (160) pour convertir numériquement le signal d'image vidéo analogique en composants d'élément d'image,
- des moyens d'aiguillage (130) reliés aux moyens de conversion analogique numérique, commandés par un signal de trame pour isoler un ensemble d'éléments d'image numérisée d'une trame d'image et une suite d'expressions numériques d'une séquence sonore numérisée associée, multiplexée dans une trame d'image adjacente,
- des moyens de mémorisation (150, 120) reliés aux moyens d'aiguillage pour mémoriser alternativement selon la commande du signal de trame, l'ensemble d'éléments d'image et la suite d'expressions numériques,
- des moyens de conversion numérique analogique (110) reliés aux moyens de mémorisation (120) pour délivrer un signal sonore analogique à partir de la suite d'expressions numériques.

## Patentansprüche

1. Verfahren zum Multiplexen eines analogen Tonsignals in einem analogen Videosignal, das eine gegebene Intensitätsstufe aufweist, bei dem das Tonsignal in einem Nutzabschnitt des Videosignals entsprechend einem Videobild in einem Multiplexer zusammengeführt wird, wobei das Verfahren daraus besteht, daß
- man das Tonsignal digitalisiert (10) und man eine Komprimierung seiner Datenmenge durchführt, um eine Folge von digitalen Datenwörtern zu erhalten;
- man zeitweise die Folge von digitalen Datenwörtern speichert (20), dadurch gekennzeichnet, daß das Verfahren die folgenden Schritte aufweist :
- man liest hintereinander aus dem Zwischenspeicher Unterabschnitte mit einer Bruchteil-Frequenz oder einer gleichen Frequenz der Horizontalfrequenz des Videosignals aus, wobei jeder digitale Unterabschnitt eine vorbestimmte minimale Anzahl von binären Elementen aufweist, die eine ausreichende Sicherheitsspanne gegenüber der Intensität des Videosignals gewährleistet;
- man wandelt (60) jeden ausgelesenen digitalen Unterabschnitt um, um in Amplitude modulierte Impulse zu liefern, deren Amplitudenstufe proportional zur Quantifizierung des betreffenden digitalen Unterabschnitts ist;
- man gibt durch Multiplexen (40) die in Amplitude modulierten Impulse in den Nutzabschnitt des Videosignals ein, um ein zusammengesetztes Signal zu liefern, das dasselbe Format hat wie ein Videosignal.

2. Verfahren gemäß Anspruch 1, bei dem ein digitaler Unterabschnitt vier binäre Elemente aufweist.

3. Verfahren gemäß Anspruch 2, bei dem ein digitales Datenwort eine um vier vielfache Anzahl von binären Elementen aufweist und bei dem die Stufe des Auslesens der digitalen Unterabschnitte eine Stufe der Zerlegung des digitalen Datenwortes in digitale Unterabschnitte und eine Stufe, die hintereinander die digitalen Unterabschnitte zu ihrem Multiplexen liefert, umfaßt.

4. Verfahren gemäß irgendeinem der vorherigen Ansprüche, bei dem jeder digitale Unterabschnitt in eine Zeitspanne eingeschrieben wird, die derjenigen einer Vielzahl von Videobild-Pixeln, vorzugsweise zwei Videobild-Pixeln, entspricht.

5. Verfahren gemäß Anspruch 4, bei dem man jedem digitalen Unterabschnitt wenigstens einen digitalen Unterabschnitt zuordnet, der einen Mittelwert der Amplitudenstufe entsprechend dem Mittelwert der Amplitudenstufen von zwei benachbarten digitalen Unterabschnitten aufweist.

6. Interaktives Verteilungssystem für Standbilder mit Ton, das die Standbilder, die den Tonsequenzen zugeordnet sind, mittels eines Video-Kommunikationsnetzes an eine Vielzahl von Empfangsstationen (280, 290) sendet, wobei dieses Netz ein analoges Videosignal benutzt, das eine gegebene Intensitätsstufe aufweist, in der ein Tonsignal in einem Nutzabschnitt des Videosignals entsprechend einem Videobild in einem Multiplexer zusammengeführt wird, dadurch gekennzeichnet, daß es aufweist :
- erste Speichereinrichtungen (50) einer Vielzahl von digitalisierten Bildelementkomplexen,
- zweite Speichereinrichtungen (20) einer Vielzahl von Folgen von digitalen Datenwörtern eines digitalisierten Tonsequenzsignals, wobei jedes Bild einer Tonsequenz zugeordnet ist,
- Ausleseeinrichtungen (70) , die mit den ersten und zweiten Speichereinrichtungen (50, 20) verbunden sind, um wechselweise aus den ersten Speichereinrichtungen (50) einen Bildelementkomplex eines digitalisierten Bildes entsprechend einem Bildraster und aus den zweiten Speichereinrichtungen (20) eine Folge von digitalen Unterabschnitten entsprechend einer Tonsequenz von vorbestimmter Dauer mit einer Bruchteilfrequenz oder gleichen Frequenz der Horizontalfrequenz des Videosignals auszulesen, wobei jeder digitale Unterabschnitt eine vorbestimmte minimale Anzahl von binären Elementen aufweist, die eine ausreichende Sicherheitsspanne gegenüber der Intensität des Videosignals gewährleisten,
- Digital-Analog-Umwandlungseinrichtungen (60), die mit den Speichereinrichtungen verbunden sind, um in analoger Form wechselweise den Bildelementkomplex und die Folge von digitalen Unterabschnitten umzuwandeln,
- Videocodierungseinrichtungen (40), die mit den Digital-Analog-Umwandlungseinrichtungen verbunden sind, um ein zusammengesetztes Signal zu liefern, das dasselbe Format hat wie ein zusammengesetztes analoges Videobildsignal, das wechselweise ein Bildelementraster und ein Raster aus digitalen Unterabschnitten aufweist.

7. System gemäß Anspruch 6, bei dem eine Empfangsstation aufweist:
- Einrichtungen zur analogen Digital-Umwandlung (160), um das aus Bildelementkomponenten analoge Videobildsignal digital umzuwandeln,
- Einrichtungen zur Verzweigung (130), die mit den analogen Digital-Umwandlungseinrichtungen verbunden sind, und die von einem Rastersignal gesteuert werden, um einen digitalisierten Bildelementkomplex eines Bildrasters und eine Folge von digitalen Datenwörtern einer zugeordneten digitalisierten Tonsequenz, die in einem benachbarten Bildraster in einem Multiplexer zusammengeführt ist, zu isolieren,
- Speichereinrichtungen (150, 120), die mit den Einrichtungen zur Verzweigung verbunden sind, um wechselweise gemäß der Steuerung des Rastersignals den Bildelementkomplex und die Folge von Datenwörtern zu speichern,
- Einrichtungen zur Digital-Analog-Umwandlung (110), die mit den Speichereinrichtungen (120) verbunden sind, um ausgehend von der Folge von digitalen Datenwörtern ein analoges Tonsignal zu liefern.

## Claims

1. A process for multiplexing an analogue sound signal in an analogue video signal having a given noise level, in which the sound signal is multiplexed in a useful part of the video signal corresponding to a video image, a process in which;
- the sound signal is digitised (10) and a compression of its output is carried out in order to obtain a series of digital expressions;
- the series of digital expressions is temporarily stored (20), characterised in that it comprises the following steps:
- from the temporary memory are extracted sequentially sub-expressions at a frequency which is a sub-multiple of the line frequency of the video signal or equal thereto, each digital sub-expression comprising a minimum predetermined number of binary elements ensuring an adequate safety margin with respect to the noise of the video signal;
- each extracted digital sub-expression is converted (60) to provide pulses of modulated amplitude of which the amplitude level is proportional to the quantification of the digital sub-expression considered;
- the pulses of modulated amplitude are introduced by multiplexing (40) in the useful part of the video signal in order to provide a composite signal having the same format as a video signal.

2. A process according to claim 1, in which a digital sub-expression comprises four binary elements.

3. A process according to claim 2, in which a digital expression comprises a number of binary elements which is a multiple of four and in which the step of extracting the digital sub-expressions comprises a step of digital expression segmentation into digital sub-expressions and a step of successively providing digital sub-expressions for their multiplexing.

4. A process according to any one of the preceding claims in which each digital sub-expression is recorded in a phase corresponding to that of a plurality of video image pixels, preferably two video image pixels.

5. A process according to claim 4, in which at least one digital sub-expression having an average value of amplitude level corresponding to the average of the amplitude levels of the two adjacent digital sub-expressions is associated with each digital sub-expression.

6. An interactive system for distributing fixed sounded-added images diffusing the fixed images associated with the sound sequences by means of a video-communication network towards a plurality of reception terminals (280, 290), this network using an analogue video signal having a given noise level, in which a sound signal is multiplexed in a useful part of the video signal corresponding to a video image, characterised in that it comprises:
- first storage means (50) of a plurality of groups of digitised image elements,
- second storage means (20) of a plurality of series of digital expressions of a signal of digitised sound sequences, each image being associated with a sound sequence,
- extraction means (70) connected to the first and second storage means (50, 20) in order to extract alternately from the first storage means (50) a group of image elements of a digitised image corresponding to an image frame, and from the second storage means (20) a series of digital sub-expressions corresponding to a sound sequence of a predetermined duration at a frequency which is a sub-multiple of the line frequency of the video signal or equal thereto, each digital sub-expression comprising a minimum predetermined number of binary elements ensuring an adequate safety margin with respect to the noise of the video signal,
- digital analogue conversion means (60) connected to the said storage means in order to convert into analogue form alternately the group of image elements and the series of digital sub-expressions,
- video coding means (40) connected to the digital analogue conversion means in order to provide a composite signal having the same format as a composite analogue video image signal comprising alternately an image elements frame and a digital sub-expressions frame.

7. A system according to claim 6, in which a reception terminal comprises
- analogue digital conversion means (160) to convert components,
- switching means (130) connected to the analogue digital conversion means, controlled by a frame signal in order to isolate a group of digitised image elements of an image frame and a series of digital expressions of an associated digitised sound sequence, multiplexed in an adjacent image frame,
- storage means (150, 120) connected to the switching means in order to store alternately, according to the control of the frame signal, the group of image elements and the series of digital expressions,
- digital analogue conversion means (110) connected to the storage means (120) in order to provide an analogue sound signal from the series of digital expressions.
